# EUROPÄISCHE PATENTSCHRIFT

(11) **EP 2 425 185 B1**
(45) Veröffentlichungstag und Bekanntmachung des Hinweises auf die Patenterteilung: **21.01.2015**
(21) Anmeldenummer: 10714256.4
(22) Anmeldetag: 15.04.2010
(51) Int. Cl.: A47J 31/54, F24H 1/10, F24H 9/20

(54) **VERFAHREN ZUR STEUERUNG EINES DURCHLAUFERHITZERS**
METHOD FOR CONTROLLING A CONTINUOUS FLOW HEATER
PROCÉDÉ DE COMMANDE D'UN CHAUFFE-EAU INSTANTANÉ

(30) Priorität: 28.04.2009 DE 102009019265
(43) Veröffentlichungstag der Anmeldung: 07.03.2012
(73) Patentinhaber: WMF Württembergische Metallwarenfabrik AG, 73309 Geislingen/Steige (DE)
(72) Erfinder: BÄCHER, Wilfrid, 89188 Merklingen (DE); GÖLTENBOTH, Frank, 89134 Blaustein (DE); GUSSMANN, Jochen, 73527 Schwäbisch-Gmünd (DE); STARTZ, Armin, 89197 Weidenstetten (DE)
(74) Vertreter: BRP Renaud & Partner mbB Rechtsanwälte Patentanwälte Steuerberater
(86) Internationale Anmeldenummer: PCT/EP2010/054966
(87) Internationale Veröffentlichungsnummer: WO 2010/124942

(56) Entgegenhaltungen:
- AT-B- 403 106
- DE-A1-102006 006 785
- DE-A1-102007 050 519

## Beschreibung

Die vorliegende Erfindung betrifft ein Verfahren zur Vergleichmäßigung eines Anlaufverhaltens, insbesondere einer Flüssigkeitsausgabetemperatur, eines Durchlauferhitzers, insbesondere mit einem Blankheizdrahtsystem in einem Getränkeautomaten.

Auch mit seiner geringen Wärmekapazität unterliegt ein Durchlauferhitzer auf Basis eines Blankdrahtheizsystems einem Anlaufverhalten. Bei erstmaligem Einschalten herrscht zum Beispiel in dem gesamten Durchlauferhitzer dieselbe Temperatur. Bei einer wiederholten Flüssigkeitsentnahme ist an einem Eingang des Durchlauferhitzers eine Zulauftemperatur und an einem Ausgang des Durchlauferhitzers eine Auslauftemperatur der vorhergegangenen Flüssigkeitsentnahme zu messen. Somit sind die folgenden Flüssigkeitsentnahmen in ihrem Temperaturprofil anders als eine erste Flüssigkeitsentnahme. Um zu erreichen, dass der Durchlauferhitzer von Anfang an die Flüssigkeit in der gewünschten Solltemperatur liefert, kann man vor einem Starten einer Pumpe zeitversetzt das Blankheizdrahtsystem einschalten. Dabei kann es allerdings zu einem Überschwingen kommen, wodurch sich zum Beispiel bei der Flüssigkeitsentnahme überhitztes Wasser durch ein starkes Verdampfen entspannt. Des Weiteren sind andere Heizsysteme denkbar, bei denen erst ab einem bestimmten Wasserfluss das Heizsystem zugeschaltet wird. Zu Beginn der Flüssigkeitsentnahme ist die Flüssigkeit kalt. Solche Heizsysteme heizen erst mit ihrer vollen Leistung, wenn der Wasserfluss einen gewissen Schwellwert überschreitet. Wird der Schwellwert unterschritten, ist und bleibt das Heizsystem abgeschaltet.

Ein derartiger Durchlauferhitzer für eine Kaffeemaschine ist aus der DE 10 2006 006785 A1 bekannt. Hierbei wird eine konstante Solltemperatur des in die Brühkammer gelangenden Wassers dadurch erreicht, dass das vom Durchlauferhitzer erhitzte Wasser mittels eines Temperatursensors überwacht und gegebenenfalls über eine Rückführleitung zum Durchlauferhitzer zurückgeführt wird bis die Solltemperatur erreicht ist. Dabei wird auch die sich zwischen dem Durchlauferhitzer und der Brühkammer befindende Wasser größtenteils über die Rückführleitung zum Durchlauferhitzer zurückgeführt. Dieses Dokument offenbart den Oberbegriff des Anspruchs 1.

Die vorliegende Erfindung beschäftigt sich mit dem Problem, für ein Verfahren für einen Durchlauferhitzer, insbesondere für den Einsatz in Getränkeautomaten anzugeben, eine verbesserte oder zumindest alternative Ausführungsform anzugeben, die sich insbesondere durch eine Kompensation des Anlaufverhaltens des Durchlauferhitzers auszeichnet.

Erfindungsgemäß wird diese Aufgabe durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, das Anlaufverhalten des Durchlauferhitzers unter Berücksichtigung oder Annahme einer Zulauftemperatur und einer nach jeder Flüssigkeitsentnahme in einem Heizkanalabschnitt und einem Ablaufkanalabschnitt verbleibenden Restmenge an Flüssigkeit zu kompensieren. Dies kann auf verschiedene Arten erfolgen und abhängig davon, für welchen Zweck der Durchlauferhitzer eingesetzt wird. So ist es zum Beispiel bei der Entnahme eines Glases Wasser zum Brühen von Tee wichtig, dass die Mischtemperatur in der Tasse eine gewünschte Solltemperatur aufweist, wobei der Temperaturverlauf zur Erreichung dieser Mischtemperatur in der Tasse von geringer Bedeutung ist. Beim Brühen von einem Espresso ist der gewünschte Sollwert der Durchlauftemperatur ab Beginn der Brühung einzuhalten. Mit vorliegender Erfindung gelingt es sowohl für die Durchlauftemperatur als auch für die Mischtemperatur die geforderten Temperatursollwerte einzuhalten, da das Anlaufverhalten des Durchlauferhitzers berücksichtigt und gegebenenfalls ausgeglichen wird. Dies wird erfindungsgemäß dadurch erreicht, dass der erste Ablaufleitungsabschnitt nach jeder Flüssigkeitsentnahme, insbesondere mit nicht erhitzter Flüssigkeit, gespült wird, so dass bei einem nachfolgenden Heizvorgang von einem stets gleichen Temperaturniveau gestartet werden kann.

In einer bevorzugten Ausführungsform ist es möglich, ausgehend von jedem beliebigen Ausgangsbetriebszustand des Durchlauferhitzers, den gewünschten Temperatursollwert sowohl einer Durchlauftemperatur als auch der Mischtemperatur zu erreichen. So soll zum Beispiel direkt nach dem Einschalten, während eines Dauerbetriebs oder nach einer Standzeit, in der der Durchlauferhitzer zwar eingeschaltet ist, aber dem Durchlauferhitzer keine Flüssigkeit entnommen worden ist, die Flüssigkeit in der gewünschten Solltemperatur entriehmbar sein. Dies ist möglich, wenn die den Durchlauferhitzer durchströmende Flüssigkeit am Anfang der Flüssigkeitsentnahme über ein Ventil und eine Rücklaufleitung solange dem Durchlauferhitzer wieder rückgeführt wird, bis eine gewünschte Starttemperatur erreicht ist. Diese Variante eignet sich besonders gut sowohl zum Erreichen des Sollwertes der Durchlauftemperatur als auch des Sollwertes der Mischtemperatur. Auch wird in diesem Fall im Gegensatz zu Ausführungsformen, bei denen ein Ablaufkanalabschnitt und ein Heizkanalabschnitt nach jeder Flüssigkeitsentnahme mit Flüssigkeit, insbesondere mit kalter Flüssigkeit, gespült wird, welches nach der Spülung verworfen wird, infolge der Rückleitung der Flüssigkeit in den Durchlauferhitzer keine Flüssigkeit verschwendet.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch:
- Fig. 1: einen Durchlauferhitzer mit einer Rückführungsleitung,
- Fig. 2: mehrere korrespondierende Diagramme eines Aufheizvorganges einer definierten Flüssigkeitsmenge,
- Fig. 3: einen Heizkanal des Durchlauferhitzers mit mehreren Heizsegmenten und Temperatursensoren.

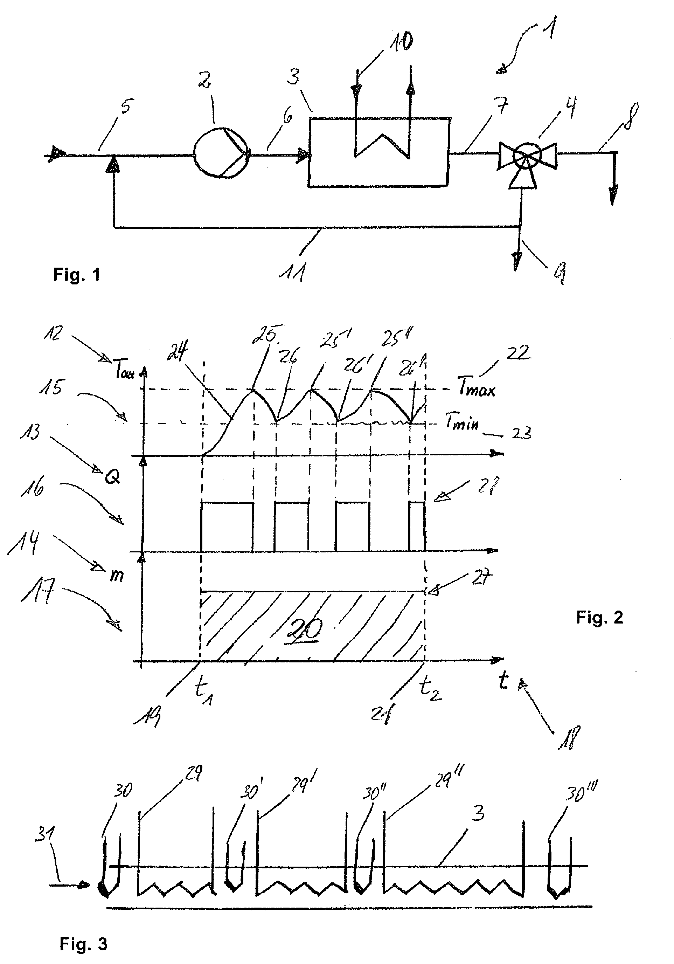

Entsprechend der Fig. 1, umfasst eine vorteilhafte Ausführungsform eines Durchlauferhitzers 1 eine Pumpe 2, einen Heizkanalabschnitt 3 und ein Ventil 4, wie z. B. ein Dreiwegeventil. Eine Zulaufleitung führt über einen ersten Zulaufleitungsabschnitt 5 in die Pumpe 2 und weiter über einen zweiten Zulaufleitungsabschnitt 6 in den Heizkanalabschnitt 3. Eine Ablaufleitung führt mit einem ersten Ablaufleitungsabschnitt 7 von dem Heizkanalabschnitt 3 in das Ventil 4. Über einen sich stromab des Ventils 4 anschließenden zweiten Ablaufleitungsabschnitt 8 ist es möglich, dem Durchlauferhitzer 1 Flüssigkeit zur weiteren Verwendung zu entnehmen. Über einen Auslauf 9 kann man den Durchlauferhitzer 1 mit Flüssigkeit spülen, wobei die Flüssigkeit über den Auslauf 9 in z.B. einen Abfluss einleitbar ist.

Um unabhängig von einer Ausgangsbetriebsbedingung, beispielsweise einem zweiten Starten des Durchlauferhitzers 1, eine stets gleiche Solltemperatur zu erhalten, wird eine nach jeder Flüssigkeitsentnahme in dem Heizkanalabschnitt 3 und im ersten Ablaufkanalabschnitt 7 verbleibende Restmenge an Flüssigkeit bei einem nachfolgenden Aufheizvorgang berücksichtigt wird. Dies kann wie nachfolgend beschrieben erreicht werden:
Beispielsweise wird bei einer nicht eingeschalteten Heizeinrichtung 10 des Heizkanalabschnitts 3 dieser, der sich daran anschließende erste Ablaufleitungsabschnitt 7 und das Ventil 4 mit einer kalten, insbesondere die Zulauftemperatur aufweisenden, Flüssigkeit gespült oder bei der eingeschalteten Heizeinrichtung 10 der Heizkanalabschnitt 3, der erste Ablaufleitungsabschnitt 7 und das Ventil 4 mit einer aufgeheizten Flüssigkeit gespült. Für den Fall, dass eine Spülung des Durchlauferhitzers 1 über den Auslauf 9 erfolgt, wird der Flüssigkeitsverbrauch erhöht, da die Spülflüssigkeit in einen Abfluss eingeleitet wird.

Erfolgt dagegen der Spülvorgang nicht über den Auslauf 9, sondern über eine Rücklaufleitung 11, die in den ersten Zulaufleitungsabschnitt 5 mündet, kann die Flüssigkeit dem Durchlauferhitzer 1 zurück geführt werden, so dass bei dieser Ausführungsform keine Flüssigkeit verschwendet wird und man die Flüssigkeit solange zirkulieren lassen kann, bis eine gewünschte Solltemperatur am zweiten Ablaufleitungsabschnitt 8 erreicht ist. Eine solche Ausführungsform kann sowohl zur Einstellung einer Mischtemperatur herangezogen werden oder auch bei einem Heizvorgang, bei dem es ab dem ersten Moment auf eine exakte Temperaturführung ankommt, wie zum Beispiel bei der Zubereitung von Espresso.

In einer weiteren Ausführungsform wird der Durchlauferhitzer 1 bei nicht aktiver Heizeinrichtung 10 des Heizkanalabschnitts 3 mit Flüssigkeit gespült, entweder über den Auslauf 9 oder über die Rücklaufleitung 11. Diese Ausführungsform eignet sich für einen Durchlauferhitzer 1, mit dem unabhängig von vorhergehenden Dosierungen ein stets gleicher Ausgangszustand hergestellt werden soll. Aufbauend darauf kann beispielsweise wie in Fig.3 dargestellt ein gewünschter Gradient im Durchlauferhitzer 1 hergestellt werden.

Ein zeitlicher Verlauf einer Flüssigkeitsentnahmetemperatur 12 der Flüssigkeit in dem zweiten Ablaufleitungsabschnitt 8 ist zusammen mit einem zeitlichen Verlauf einer Heizleistung 13 und einem zeitlichen Verlauf einer Flüssigkeitsentnahmemenge 14 in mehreren Diagrammen 15, 16, 17 gemäß der Fig. 2 dargestellt. Dabei sind ein Flüssigkeitsentnahme-Temperatur-Zeit-Diagramm 15, ein Heizleistungs-Zeit-Diagramm 16 und ein Flüssigkeitsentnahme-Zeit-Diagramm 17 übereinander und korrespondierend über eine gemeinsame Zeitachse 18 vergleichbar dargestellt. Zum einem Startzeitpunkt 19 (t₁) einer Flüssigkeitsentnahme wird zeitgleich zum Einschalten der Pumpe 2 die Heizeinrichtung 10 eingeschaltet, wie dem Heizleistungs-Zeit-Diagramm 16 zu entnehmen ist. Ist eine gewünschte Menge 20 an Flüssigkeit ausgegeben worden, so stoppt zu einem Endzeitpunkt 21 (t₂) der Flüssigkeitsentnahme die Pumpe 2 und zeitgleich dazu wird die Heizeinrichtung 10 gemäß dem Heizleistungs-Zeit-Diagramm 16 ausgeschaltet. Dem Flüssigkeitsentnahme-Temperatur-Zeit-Diagramm 15 ist zu entnehmen, dass die Flüssigkeitsentnahme-Temperatur 12 zwischen einer maximalen Flüssigkeitsentnahme-Temperatur 22 und einer minimalen Flüssigkeitsentnahme-Temperatur 23 schwankt. Dies kommt dadurch zustande, dass die Heizeinrichtung 10 nur bis zu einer bestimmten Temperatur, nämlich der maximalen Flüssigkeitsentnahmetemperatur 22, aufgeheizt werden darf, damit keine Überhitzung eintritt und eine damit einhergehende Beschädigung der Heizeinrichtung 10 vermieden wird. Dazu wird die Heizeinrichtung 10 immer ab Erreichen der maximalen Flüssigkeitsentnahmetemperatur 22 ausgeschaltet und wieder eingeschaltet, wenn ein unterer Schwellwert der Flüssigkeitsentnahmetemperatur 12, die minimale Flüssigkeitsentnahmetemperatur 23 erreicht ist. Dies führt dazu, dass immer dann, wenn eine Flüssigkeitsentnahme-Temperatur-Zeitkurve 24 des Diagramms 15 die maximale Flüssigkeitsentnahmetemperatur 22 in mehreren Kurvenpunkten 25, 25', 25" erreicht, die Heizeinrichtung 10, wie dem Heizleistungs-Zeit-Diagramm 16 entnommen werden kann, ausgeschaltet wird. Erreicht die Flüssigkeitsentnahme-Temperatur-Zeitkurve 24 die minimale Flüssigkeitsentnahmetemperatur 23, wie in den Kurvenpunkten 26, 26', 26", wird die Heizeinrichtung 10 solange wieder eingeschaltet, bis die FlüssigkeitsentnahmeTemperatur-Zeitkurve 24 wieder die maximale Flüssigkeitsentnahmetemperatur 22 erreicht hat. Dies wiederholt sich so oft, bis der Endzeitpunkt 21 (t₂) der Flüssigkeitsentnahme erreicht und die gewünschte Menge 20 an Flüssigkeit ausgegeben worden ist.

Im Falle eines in Fig. 2 dargestellten Flüssigkeitsentnahmeprozesses ist sowohl eine zeitlich abhängige Flüssigkeitsentnahmemenge 27, als auch eine zeitlich abhängige Heizleistung 28 konstant. In diesem Fall lässt sich eine Mischtemperatur der gewünschten Menge 20 an Flüssigkeit unter Berücksichtigung der zeitlich abhängigen Flüssigkeitsentnahmemenge 27 und durch Integration der Flüssigkeitsentnahme-Temperatur-Zeitkurve 24 rechnerisch bestimmen. Zweckmäßig wird diese rechnerische Bestimmung während der Flüssigkeitsentnahme, zwischen dem Startzeitpunkt 19 und Endzeitpunkt 21 der Flüssigkeitsentnahme und in mehreren Zeitintervallen vorgenommen und basierend auf einem jeweiligen Ergebnis wird dynamisch die minimale Flüssigkeitsentnahmetemperatur 23 und/oder die maximal Flüssigkeitstemperatur 22 angepasst, ab dem die Heizeinrichtung 10 wieder eingeschaltet wird, angepasst. Falls sich die zeitlich abhängige Flüssigkeitsentnahmemenge 27 nicht konstant verhält, muss dies ebenfalls rechnerisch, zum Beispiel durch Integration einer Kurve der zeitlich abhängigen Flüssigkeitsentnahmemenge 27 berücksichtigt werden.

In einer weiteren Ausführungsform wird die in dem Heizkanalabschnitt 3 befindliche Heizeinrichtung 10 entsprechend Fig. 3, in drei oder mehrere Heizsegmente 29, 29', 29" unterteilt. Eine solche dreiteilige Segmentierung der Heizeinrichtung 10 besonders an, wenn die Heizeinrichtung 10 aufgrund ihrer sehr großen Leistung mit drei Netzphasen, also mit Starkstrom, betrieben werden muss. Es ist eine aus mehreren Heizsegmenten 29, 29', 29" ausgebildete Unterteilung der Heizeinrichtung 10 auch dann sinnvoll, wenn die Heizsegmente 29, 29', 29" abhängig oder unabhängig voneinander schaltbar sein sollen. Unterstützt durch mehrere Temperatursensoren 30, 30', 30", 30'" vor und nach den Heizsegmenten 29, 29', 29" lässt sich ein Temperaturgradient im Heizkanalabschnitt 3 entlang der Fließrichtung 31 erzeugen. Die Temperatursensoren 30, 30', 30", 30'" sind dabei vorteilhaft als Thermistoren, wie zum Beispiel ein NTC- oder PTC-Widerstand, ausgebildet. Mit Hilfe dieser Temperatursensoren 30, 30', 30", 30"' lässt sich beim Einschalten des Durchlauferhitzers 1 durch eine unterschiedliche Bestromung der Heizsegmente 29, 29', 29" ein Temperaturgradient simulieren, der einem Temperaturgradienten während einer Dauerentnahme von Flüssigkeit aus dem Durchlauferhitzer 1 gleichkommt. Erst nach einer solchen Aufheizphase, wird die Pumpe 2 gestartet und alle Heizsegmente 29, 29', 29" gleichmäßig bestromt. Dadurch lässt sich ebenfalls das Anlaufverhalten des Durchlauferhitzers 1 kompensieren. Dabei kann die Heizleistung 13 oder eine Heizleistung pro Länge der Heizsegmente 29, 29', 29" variierbar sein.

In einer anderen Ausführungsform kann eine Soll-Mischtemperatur einer bestimmten Menge an auszugebender Flüssigkeit durch Hinzu- oder Abschalten von einzelnen Heizsegmenten 29, 29', 29" erreicht werden. Dabei werden zumindest aufgrund der sensorisch erfassten Ausgabetemperatur 12 einzelne Heizsegmente 29, 29', 29" hinzu- oder abgeschaltet, so dass sich durch rechnerisch unterstütztes Anpassen der minimalen Ausgabetemperatur 23 und/oder der maximalen Ausgabetemperatur 22 die gewünschte Soll-Mischtemperatur in der ausgegebenen Flüssigkeitsmenge einstellt.

## Patentansprüche

1. Verfahren zur Vergleichmäßigung eines Anlaufverhaltens, insbesondere einer Flüssigkeitsausgabetemperatur, eines Durchlauferhitzers (1), insbesondere mit einem Blankheizdrahtsystem in einem Getränkeautomaten, bei dem
- ein von einer Heizeinrichtung (10) des Durchlauferhitzers (1) beheizbarer Heizkanalabschnitt (3) und eine sich daran bis zu einer Entnahmeeinrichtung anschließende Ablaufleitung (7, 8) mit einem ersten Ablaufleitungsabschnitt (7) von einer Flüssigkeit durchströmt werden,
- die Heizeinrichtung (10) des Durchlauferhitzers (1) die Flüssigkeit auf eine gewünschte Solltemperatur aufheizt, und
- eine nach jeder Flüssigkeitsentnahme in dem Heizkanal (3) und in der Ablaufleitung (7, 8) verbleibende Restmenge an Flüssigkeit bei einem nachfolgenden Aufheizvorgang berücksichtigt wird,
**dadurch gekennzeichnet,**
- **dass** der erste Ablaufleitungsabschnitt (7) nach jeder Flüssigkeitsentnahme, insbesondere mit nicht erhitzter Flüssigkeit, gespült wird, so dass bei einem nachfolgenden Heizvorgang von einem stets gleichen Temperaturniveau gestartet werden kann,
- **dass** die den Durchlauferhitzer (1) durchströmende Flüssigkeit über ein Ventil (4) solange in einen Auslauf (9) eingeleitet wird, bis die gewünschte Solltemperatur erreicht ist, oder
- **dass** die den Durchlauferhitzer (1) durchströmende Flüssigkeit über das Ventil (4) und eine Rücklaufleitung (11) solange dem Durchlauferhitzer (1) erneut zugeführt wird, bis die gewünschte Solltemperatur erreicht ist.

2. Verfahren nach Anspruch 1,
**dadurch gekennzeichnet,**
**dass** die durch die Heizeinrichtung (10) des Durchlauferhitzers (1) strömende Flüssigkeit unabhängig von einem der nachfolgenden Ausgangsbetriebszustände,
- direkt nach dem Einschalten,
- während eines Dauerbetriebs,
- nach einer Standzeit ohne eine Flüssigkeitsentnahme,
auf die gewünschte Solltemperatur aufgeheizt wird.

3. Verfahren nach einem der vorhergehenden Ansprüche,
**dadurch gekennzeichnet,**
**dass** zumindest einer der nachfolgenden Parameter gemessen wird,
- die Temperatur der in dem Heizkanalabschnitt (3) und/oder in der Ablaufleitung verbleibenden Restmenge an Flüssigkeit,
- ein Temperaturverlauf der Flüssigkeit in dem Heizkanalabschnitt (3) und/oder in der Ablaufleitung während des Heizvorgangs,
- ein Volumenstrom der den Durchlauferhitzer (1) durchströmenden Flüssigkeit,
woraus eine Mischtemperatur der erwärmten und ausgegebenen Flüssigkeit an der Entnahmeeinrichtung rechnerisch ermittelt wird.

4. Verfahren nach einem der vorhergehenden Ansprüche,
**dadurch gekennzeichnet,**
**dass** im Heizkanalabschnitt (3) eine Heizleistung pro Länge variierbar ist.

5. Verfahren nach einem der vorhergehenden Ansprüche,
**dadurch gekennzeichnet,**
**dass** der Heizkanalabschnitt (3) mehrere Heizsegmente (29, 29', 29") aufweist und zumindest zwei beliebige dieser Heizsegmente (29, 29', 29") während des Heizvorgangs abhängig oder unabhängig voneinander aktiviert werden.

6. Verfahren nach Anspruch 5,
**dadurch gekennzeichnet,**
**dass** vor und/oder nach jedem dieser Heizsegmente (29, 29', 29") ein Temperatursensor (30, 30', 30", 30'") angeordnet ist.

7. Verfahren nach Anspruch 6,
**dadurch gekennzeichnet,**
**dass** durch die in dem Heizkanalabschnitt (3) angeordneten Temperatursensoren (30, 30', 30", 30'") ein Temperaturgradient des Heizkanalabschnitts (3) gemessen wird und/oder durch die Heizsegmente (30, 30', 30", 30"') ein Temperaturgradient eingestellt wird.

## Claims

1. A method for homogenizing a start-up behavior, in particular of a liquid discharge temperature, of a continuous-flow heater (1), in particular comprising a bare heating wire system in a beverage machine, in the case of which
- a liquid flows through a heating channel section (3), which can be heated by a heating device (10) of the continuous-flow heater (1) and a drain line (7, 8), which is connected thereto up to a removal device and which comprises a first drain line section (7),
- the heating device (10) of the continuous-flow heater (1) heats the liquid to a desired set-point temperature, and
- a residual quantity of liquid, which remains in the heating channel (3) and in the drain line (7, 8) after each liquid removal, is considered in a subsequent heating process,
**characterized in**
- **that** the first drain line section (7) is flushed after each liquid removal, in particular with non-heated liquid, so that a temperature level, which is always the same, can be used in response to a subsequent heating process,
- **that** the liquid, which flows through the continuous-flow heater (1), is introduced into an outlet (9) via a valve (4) until the desired set-point temperature is reached, or
- **that** the liquid, which flows through the continuous-flow heater (1), is supplied again to the continuous-flow heater (1) via the valve (4) and a return line (11) until the desired set-point temperature is reached.

2. The method according to claim 1,
**characterized in**
**that** the liquid, which flows through the heating device (10) of the continuous-flow heater (1), is heated to the desired set-point temperature, independent from one of the following initial operating states,
- directly after switch-on,
- during a continuous operation,
- after a downtime without a liquid removal.

3. The method according to one of the preceding claims, **characterized in**
**that** at least one of the following parameters is measured,
- the temperature of the residual quantity of liquid, which remains in the heating channel section (3) and/or in the drain line,
- a temperature sequence of the liquid in the heating channel section (3) and/or in the drain line during the heating process,
- a volumetric flow rate of the liquid, which flows through the continuous-flow heater (1),
from which a mixing temperature of the heated and discharged liquid is calculated at the removal device.

4. The method according to one of the preceding claims, **characterized in**
**that** a heat output per length can be varied in the heating channel section (3).

5. The method according to one of the preceding claims, **characterized in**
**that** the heating channel section (3) encompasses a plurality of heating segments (29, 29', 29") and at least any two of said heating segments (29, 29', 29") are activated during the heating process, either dependent on or independent from one another.

6. The method according to claim 5,
**characterized in**
**that** a temperature sensor (30, 30', 30", 30"') is arranged upstream or and/or downstream from each of said heating segments (29, 29', 29").

7. The method according to claim 6,
**characterized in**
**that** a temperature gradient of the heating channel section (3) is measured by means of the temperature sensors (30, 30', 30", 30"') arranged in the heating channel section (3), and/or a temperature gradient is adjusted by means of the heating segments (30, 30', 30", 30'").

## Revendications

1. Procédé d'homogénéisation d'un comportement au démarrage, notamment d'une température de distribution d'un liquide d'un chauffe-eau instantané (1), notamment avec un système de filament chauffant fin dans un distributeur de boissons, dans lequel
- un tronçon (3) du canal de chauffage pouvant être chauffé par un système de chauffage (10) du chauffe-eau instantané et un conduit d'écoulement (7, 8) s'y raccordant jusqu'à un système de prélèvement par un premier tronçon (7) de conduit d'écoulement sont traversés par un liquide
- le système de chauffage (10) du chauffe-eau instantané (1) chauffe le liquide à une température de consigne souhaitée et
- une quantité résiduelle de liquide restant dans le canal de chauffage (3) et dans le conduit d'écoulement (7, 8) après chaque prélèvement de liquide est pris en compte lors d'un processus de chauffage suivant,
**caractérisé**
- **en ce que** le premier tronçon (7) de conduit d'écoulement est rincé, notamment avec du liquide non chauffé après chaque prélèvement de liquide, de sorte que lors d'un processus de chauffage suivant, il est possible de démarrer toujours à partir d'un niveau de température toujours identique,
- **en ce que** le liquide traversant le chauffe-eau instantané (1) est introduit par l'intermédiaire d'un clapet (4) dans une sortie (9) jusqu'à ce que la température de consigne soit atteinte ou
- **en ce que** le liquide traversant le chauffe-eau instantané (1) est réalimenté vers le chauffe-eau instantané (1) par l'intermédiaire du clapet (4) et un conduit de retour (11) jusqu'à ce que la température de consigne soit atteinte.

2. Procédé selon la revendication 1,
**caractérisé**
**en ce que** le liquide traversant le système de chauffage (10) du chauffe-eau instantané (1) est chauffé à la température de consigne souhaitée, indépendamment de l'un des états de service initiaux suivants :
- directement après la mise en route,
- pendant un service continu,
- après un temps d'inutilisation sans prélèvement de liquide.

3. Procédé selon l'une quelconque des revendications précédentes,
**caractérisé**
**en ce qu'**au moins l'un des paramètres suivants est mesuré,
- la température de la quantité résiduelle de liquide restant dans le tronçon (3) de canal de chauffage et/ou dans le conduit d'écoulement,
- une courbe de température du liquide dans le tronçon (3) de canal de chauffage et/ou dans le conduit d'écoulement pendant le processus de chauffage,
- un débit volumétrique du liquide traversant le chauffe-eau instantané (1),
à partir duquel une température du mélange de liquide chauffé et restitué est calculée sur le système de prélèvement.

4. Procédé selon l'une quelconque des revendications précédentes,
**caractérisé**
**en ce que** dans le tronçon (3) de canal de chauffage, une puissance de chauffe par longueur est variable.

5. Procédé selon l'une quelconque des revendications précédentes,
**caractérisé**
**en ce que** le tronçon (3) de canal de chauffage comporte plusieurs segments (29, 29', 29") de chauffe et en ce qu'au moins deux quelconques desdits segments (29, 29', 29") de chauffe sont activés pendant le processus de chauffe, en dépendance ou indépendamment l'un de l'autre.

6. Procédé selon la revendication 5,
**caractérisé**
**en ce qu'**en amont et/ou en aval de chacun desdits segments (29, 29', 29") de chauffe est placé un capteur de température (30, 30', 30'', 30''').

7. Procédé selon la revendication 6,
**caractérisé**
**en ce qu'**un gradient thermique du tronçon (3) de canal de chauffage est mesuré par les capteurs de température (30, 30', 30'', 30''') placés dans le tronçon (3) de canal de chauffage, et/ou un gradient de température est réglé par les segments (30, 30', 30'', 30''') de chauffe.
